# EUROPEAN PATENT SPECIFICATION

(11) **EP 1 677 999 B1**
(45) Date of publication and mention of the grant of the patent: **10.12.2008**
(21) Application number: 04793817.0
(22) Date of filing: 19.10.2004
(51) Int. Cl.: B60H 3/00, F28G 9/00

(54) **AIR CONDITIONER CLEANING APPARATUS AND METHOD**
KLIMAANLAGENREINIGUNGSVORRICHTUNG UND -VERFAHREN
DISPOSITIF ET PROCEDE DE NETTOYAGE DE CLIMATISEUR

(30) Priority: 20.10.2003 US 512087 P; 20.10.2003 SE 0302793
(43) Date of publication of application: 12.07.2006
(73) Proprietor: NUTSOS, Mikael, 146 53 Tullinge (SE)
(72) Inventor: NUTSOS, Mikael, 146 53 Tullinge (SE)
(74) Representative: Svanfeldt, Hans-Åke
(86) International application number: PCT/SE2004/001515
(87) International publication number: WO 2005/037585

(56) References cited:
- EP-A1- 0 364 381
- EP-A1- 1 095 805
- WO-A1-94/17356
- DE-A1- 4 017 052

## Description

The present invention relates to an air conditioner cleaning apparatus and method effectively impeding odour and pollution originating from an air conditioning system. In particular, the present invention relates to a cleaning apparatus suitable for use in an air conditioning system in a vehicle.

### Background of the Invention

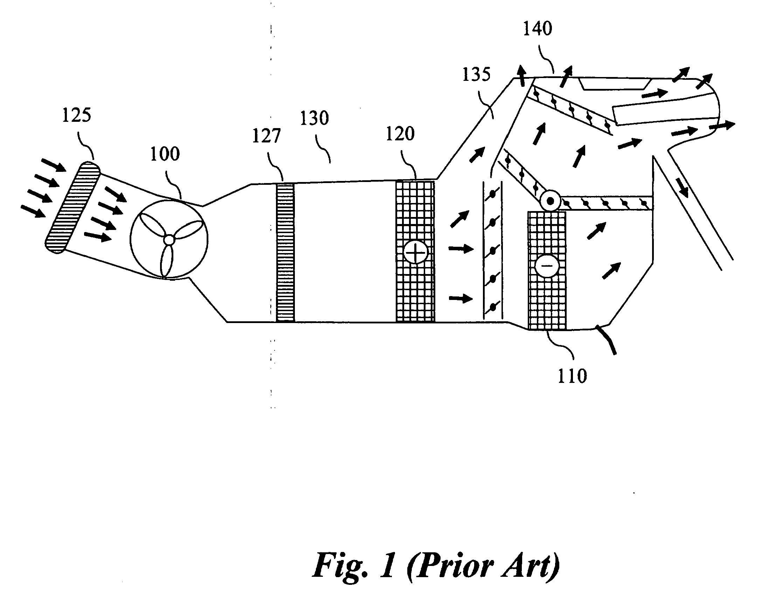

An increasing number of vehicles are equipped with means for cooling the inlet air for the passenger compartment. The by far most common way of cooling the inlet air is by the use of an air conditioner, utilizing the refrigerating principles for cooling. In vehicles the air conditioner is typically assembled in connection with a fan and a heater radiator forming a heating/cooling system, or climate controller, for the interior of the vehicle. Schematically depicted in FIG. 1 is an example of a prior art vehicle heating/cooling system, comprising of a fan unit 100, a cooling unit 110 and a heating unit 120 provided in a common housing 130. Provided in the housing, or adjacent to it, are in addition dampers 135 and possibly other means of controlling the air flow (not shown). The heating/cooling system is typically provided with means for filtering 125, 127 the intake air. The fan unit 100 forces the inlet air via the cooling unit 110 and the heating unit 120 into the passenger compartment of the vehicle. A system of channels and dampers 140 is typically used to distribute the air in the compartment. Depending on the desired temperature of the compartment in relation with the ambient temperature, the inlet air is either cooled or heated. The heating unit 120 typically comprises of a heat radiator connected to engine's cooling system and is hence fed with water of about 90 C at normal operating conditions. The heating unit may alternatively be for example an electrical heater. The cooling unit 110 is typically the evaporator of in an refrigerating assembly also comprising an expansion valve, a compressor, and a condenser. The condenser and compressor are in the vehicle applications normally positioned outside of the common housing 130 and the compressor driven directly by the vehicles engine. To facilitate an efficient cooling of the inlet air the evaporator is provided with a plurality of evaporator coils 140 surrounded by cooling flanges 150. In cars, for example, size and weight of every component are of importance. In order to reduce the size of the cooling/heating system and still preserve an effective cooling, the coils and cooling flanges of the evaporator are often arranged in an intricate manner, for example in a honeycomb arrangement.

The widespread use of air conditioners in vehicles have greatly improved the interior environment with regards to the temperature, but a well recognized drawback with the systems are that the cooled air may be perceived as not being fresh. Under certain conditions may even a characteristic and strong odour occur. In addition an increase of allergic reactions such as sneezing and teary eyes among drivers and passenger has been observed. Similar problems are well known in the area of ventilation of buildings.

The origin of the odour and the potentially harmful substances and micro organisms is to be found in the build-up and growth of for example mildew, mould, fungi and bacteria within the air conditioning unit. In particular, the evaporator provides an environment that allows micro organisms to get stuck to it and to grow. The for micro organisms suitable environment arises since the cold evaporator will cause the humidity in the air to condensate on its surface. When the air conditioning unit is turned off, for example when the vehicle is not in use, the temperature will rise and the moist and the water remaining in especially corners and nooks of the cooling flanges will provide very suitable environments for the micro-organism to get stuck and grow. Micro-organisms are always present in the air, and since the fan will force a large volume of air through the evaporator and since the filtering device typically is relatively coarse, a continuous supply of micro-organisms to the air conditioner is to be expected. The fact that the evaporator is allowed to warm up is of importance since the growth of for example bacteria will be low at low temperatures. The modern type of automatic climate controllers (ACC), in for example cars, accentuate the problem, since these apparatus typically turns the air conditioner on and off frequently during normal operation.

In addition to the discomfort of odour and potential health risks the build-up of micro-organisms and other particles on the surface of the evaporator will impede the efficiency of the air cooling system. The lower efficiency will in turn lead to a higher fuel consumption and eventually to a noticeable loss of function in the ability to cool the ingoing air to a sufficient degree.

The problem is of special importance for persons using vehicles in their profession, for example truck drivers, taxi drivers and operators of trucks, excavators etc.

One method, known in the art, of addressing the problem of odour and potentially harmful micro-organisms and particles comprises the use of air filters, provided after the cooling and heating units. Filtering devices are taught in US 5,681,218. The systems utilizing filters have the drawback of, to be able to filter off small particles and odour, the filter must be of very high quality and with a high filtering factor. Such filter are expensive, needs to be replaced frequently and causes a substantial pressure drop, leading to a low air flow into the passengers compartment. In addition the filtering does not address the cause of the problem, the growth of micro-organisms in the air conditioning system, and will not prevent the efficiency degeneration of the evaporator.

Stationary air conditioning units, for example the types used in buildings, are often cleaned by spraying pressurized water on the evaporator. US patent nr. 5,509,972 teaches a method of cleaning by, in a controlled manner, spraying a foamy detergent on a heat exchanger. In a vehicle the evaporator of the air conditioner is typically not accessible without an extensive dismounting and these method are therefore not suitable for regular maintenance of a vehicle mounted air conditioning unit.

Commercially available products, for example Air Clean Control from Innotec USA, limits the growth of micro-organisms by the use of detergent in the form of mist or foam that is sprayed into the heating/cooling system of a vehicle, via the air inlet dampers in the passenger compartment. These methods have shown a short time effect in reducing odour, but are cumbersome to use and does not remove the build-up on e.g. the evaporator. In addition., it might, depending on the design of the heating/cooling system, not be possible to reach the interior of the air conditioning unit.

EP-A1-1 095 805 discloses as closest prior art a cleaning system according to the preamble of claim 1.

FR-A1-2 571 131 shows a heating system for a cleaning substance, using heat generated in the refrigerant circuit of the air conditioning system of the vehicle.

### Summary of the Invention

The objective problem is to provide a method and an apparatus for reducing the discomfort of odour and potential health risks associated with the existence and growth of micro-organisms such as bacteria, fungi, mould and mildew in the air conditioning units of vehicles.

The problem is solved by the system as defined in claim 1 and the method as defined in claim 12.

In order to achieve the above-mentioned object, according to the invention, a cleaning system comprising a cleaning assembly for cleaning cooling and/or heating units of air conditioners in vehicles is provided. The cleaning assembly comprises of at least one distribution tube provided with at least one nozzle arranged to spray cleaning substance onto the surfaces of the cooling and/or heating units. The cleaning assembly is preferably in fluid communication with means for heating the cleaning substance. The means for heating is preferably a heat exchanger which is heated by the cooling system of the vehicles engine. Alternatively the cleaning assembly is connectable to an external source of cleaning substance, a pressurized replaceable container of cleaning spray or foam, or to a steam apparatus, or combinations of these.

In a further embodiment the cooling unit and/or heating unit comprises of a plurality of coils and a plurality of heating/cooling flanges attached to the coils, and the distribution tube is arranged to extend through at least a portion of the plurality of flanges. The distribution tube preferably extends through at least a portion of the plurality of flanges and is provided with nozzles in the spaces formed between two adjacent flanges.

The method according to the present invention comprises the steps of:
- determining that the heating/cooling system needs to be clean;
- sealing the part of the heating/cooling unit that should be cleaned;
- heating the cleaning substance is heated in a heat exchanger;
- flowing a pressurized cleaning substance through a feeding tubes to at least one distribution tube and further via at least one nozzle to be sprayed onto the heating unit and/or cooling unit.

Alternatively the cleaning substance is heated to steam in a steam apparatus.

Thanks to the inventive apparatus, system and method, micro-organism and dirt can be effectively removed from primarily the heating and cooling units of the heating/cooling system of a vehicle. Thus the quality of the air in the vehicles interior will be significantly improved.

### Brief Description of the Drawings

The invention will now be described in detail with reference to the drawing figures, in which
Fig. 1 a) is a schematic view of a prior art air conditioning unit suitable for use in a vehicle;
Fig. 2 a) is a schematic view of a cleaning assembly integrated in an air conditioning unit according to the invention;
Fig. 3 is a schematic view of an air conditioning cleaning system according to a preferred embodiment of the invention;
Fig. 4 is a schematic view of an air conditioning cleaning system according to a further embodiment of the invention;
Fig. 5 is a schematic view of an air conditioning cleaning system according to a further embodiment of the invention;
Fig. 6 shows an exemplifying implementation of the cleaning system according to one embodiment of the present invention;
Fig. 7 shows an exemplifying implementation of the cleaning system according to another embodiment of the invention; and
Fig. 8 shows an exemplifying implementation of the cleaning system according to a further embodiment of the invention;

### Detailed Description of the invention

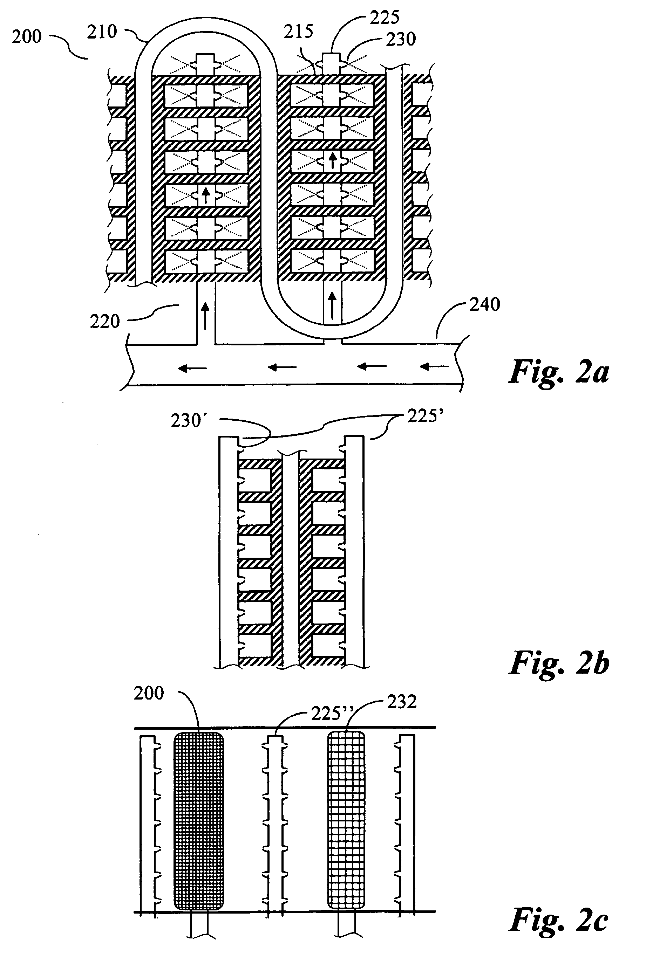

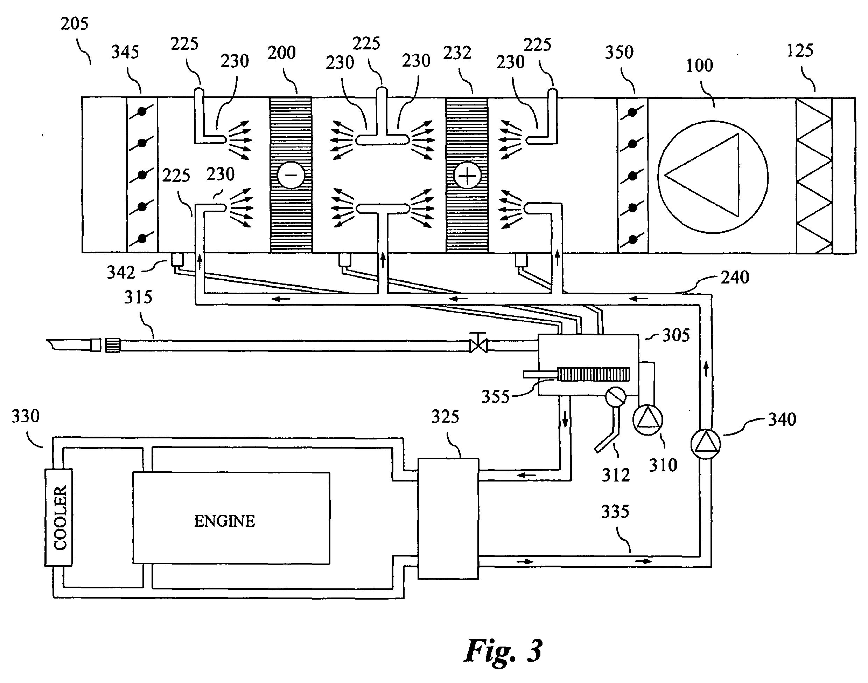

The principle of the present invention will be described with reference to the schematic illustration of FIGs. 2 and 3. Depicted in FIG 2a is, in a cross-sectional frontal view, a cooling unit of an air conditioning unit. The cooling unit is realized by an evaporator 200 and contained in a housing (not shown). The housing typically also contain other functional parts of an air conditioning unit such as a fan, dampers and a heat radiator, which have for the reason of clarity been omitted in FIG 2a. The evaporator 200 comprises of the evaporator coils 210 in which the cooling media flows. The evaporator coils 210 are preferably in a back and forth arrangement in order to provide a suitable length within a limited area. The evaporator coils are provided with cooling flanges 215, brazed or fastened by other means, to the evaporator coils 210. According to the invention a cleaning assembly 220 are provided within, on the surface of or adjacent to the evaporator 200. In a preferred embodiment the cleaning assembly 220 comprises of a plurality of distributing tubes 225 arranged to extend through the cooling flanges 215. The distributing tubes 225 are provided with a plurality of nozzles 230, preferably with at least one nozzle 230 in essentially each of the spaces 235 formed between two adjacent cooling flanges. The tubes 225 are connected to feeding tubes 240. Cleaning substance, e.g. pressurized liquid such as hot water mixed with detergent, is supplied to the feeding tubes 240, which distribute the liquid to the tubes 225, illustrated with arrows. The water is then streamed from the nozzles 230 onto the cooling flanges 215 and the evaporator coils 210 of the evaporator 200 (indicated by dashed lines in the figures). The micro-organisms will be killed by the hot water and detergent and any build up on the evaporator 200 will be washed away by the liquid stream. Hence an effective cleaning of the evaporator 200 is achieved. A wide range of suitable detergents are commercially available, for example Sterilium^{™}.

Alternatively, the tubes 225' can be provided on the surface of the evaporator 200, as shown in a side-view of a cooling unit and a cleaning assembly in FIG. 2b. The nozzles 230' are directed towards the interior of the evaporator 200. In a further alternative arrangement, shown in FIG. 2c, the distribution tubes 225" are arranged a distance from the surface of the evaporator 200. With this arrangement the number of nozzles can be reduced since each nozzle 230" can be arranged to cover more than one of the spaces formed by adjacent cooling flanges. However, care has to be taken to provide sufficient flow of the cleaning substance in the interior parts of the evaporator 200.

The growth of micro-organism and the build-up of particles are, as described in the background section, in most cases worst on the evaporator,. Also other parts of the air conditioning unit 200 may be exposed to similar problems, in particular the heating unit. The heating unit is typically realized by a radiator fed with water from the engines cooling system. The heating radiators principle construction is very similar to that of the evaporator and also the heating radiator may be provided with a cleaning assembly according to the above described. The cleaning system for the heater radiator is preferably fully integrated with the cleaning system for the evaporator and utilize the same feeding duct etc. In one embodiment of the present invention, illustrated in FIG 2c, at least one distribution tube 225, is located in between the cooling 200 and the heating 232 units and is provided with nozzles 230 which are directed towards both the cooling and the heating unit.

As appreciated by the skilled in the art the design of the evaporator 200 (cooling unit) and heater radiator (heating unit) may differ substantially depending on its intended use, the space provided in the vehicle, the cooling media etc. The cleaning system according to the invention will have to be adapted accordingly and also to the cleaning substance and the used pressure. Such adaptations include, but is not limited to the number of, arid the shape of, the nozzles 230. In certain applications the nozzles may be in the form of simples holes, typically in a large number, in the distribution tubes 225. In other applications a more elaborate nozzle design is preferable. One type of nozzles which can be advantageous to utilized are moving nozzles, which are arranged to swing from side to side and/or up and down by the liquid pressure. Such nozzle arrangements are known and commercial available.

In a preferred embodiment according to the present invention, the cleaning assembly 220 is comprised in a cleaning system which utilizes heat produced within the vehicle to heat the cleaning substance, preferably heat from the engines cooling system is utilized, but also other types of excess heat for example from the exhaust gases may be utilized. The cleaning system is schematically shown in FIG. 3. The cleaning system comprises the cleaning assembly 220 partly contained in the housing 205. The cleaning substance, for example water, is stored in a storing tank 305. In connection to the storage tank 305 is a dosage unit 310 for providing a predetermined dosage of detergent to the cleaning substance. The storage tank 305 is provided with an inlet 315 for external supply of the cleaning substance and an outlet 312 for draining the storage tank. Via a tubing arrangement 320, and possibly a circulation pump the storage tank 305 is connected to one side of a heat exchanger 325. The other side of the heat exchanger 325 is coupled to the engines cooling system 330. From the heat exchanger 325 the cleaning substance is led in further tubing arrangement 335 via a pressure increasing pump 340 to the feeding tubes 240 which supplies the distribution tubes 225 and nozzles 230 with the now heated and pressurised cleaning substance. The heat exchanger may also comprise, or be connected to, a heat accumulator which stores heat during the vehicles normal operation. Such heat accumulators are provided in some vehicles for the use of heating the vehicle then the engine is not running and can be utilized also for the cleaning system according to present invention.

The housing is provided with at least one drainage 342 positioned at the bottom of the air conditioning unit and arranged to collect the cleaning substance that has emerged from the nozzles and poured down mainly from the evaporator 200 and the heat radiator 232. The drainage may advantageously be connected to the storage tank for reusing the cleaning substance. Alternatively the used cleaning substance is discarded.

The cleaning system will also typically be provided with a plurality of valves and adjustment means (not shown) in order to achieve suitable flows and pressures and to start and stop the cleaning process. The process is preferably controlled by microprocessors and in them executed functions. This functionality is preferably incorporated and integrated with the vehicles controlling system.

Additionally the housing is preferably equipped with first and second dampers 345, 350, which are closed during a cleaning operation in order to prevent the cleaning liquid, spray or moist to enter into the passengers compartment or to reach parts of the air conditioning unit which are not suitable to be exposed to the cleaning substance, e.g. the fan and the air filter. The cleaning system may be designed not only to clean the evaporator and/or the heating unit, but also other parts of the heating/cooling system of the vehicle. Distribution tubes 225 and nozzles 230 may be provided in and directed towards other parts of the heating/cooling system, e.g. towards the inside of the dampers, and not at least towards the housing 205 itself.

In another embodiment the storage tank 305 is provided with a heating device 355, preferably a immersion heater 355. The purpose of the heating device is to heat the cleaning substance if the heat transferred from the engine via the heat exchanger 325 will not suffice. Alternatively the heating device 355 may be the only source of heat, in which case the heat exchanger 325 and the tubing system that connects the heat exchanger with the engines cooling system is omitted. This can be a favourable solution in vehicles that are not powered by combustion engines, for example electrically or by gas turbine powered cars.

In a preferred mode of operation, the cleaning system according to the invention is used in a method which comprises the steps of:
a: -detecting that the air conditioning unit needs to be cleaned. The detection may e.g. be made by the operator of the vehicle, by an automated measurement system detecting build-up on the evaporator or other any measure indicating that cleaning is needed, or by that a predetermined time period between cleaning has passed.
b: -Initiate the cleaning process, preferably shortly after that the engine is turned off. Possibly other criteria should be met in order to perform the cleaning processes, e.g. the vehicle should be halted, parking brake and/or automatic gears in parking position, no persons remaining in the passengers compartment. In addition the operator of the vehicle can be given information on that a cleaning process is about to take place and is given the opportunity to cancel the process.
c: -optionally detergent is added from the dosage pump 310 to the cleaning substance in the storage tank 305.
d: -the heated water in the engines cooling system 330 is directed to the heat exchanger 325.
e: -the circulation pump starts transporting cleaning substance from the storage tank 305 to the heat exchanger 325, wherein the cleaning substance is heated, preferably to a temperature above 60°C, and even more preferably to a temperature around 80°C. If needed, and if the storage tank is provided with additional heating means, such as the immersion heater 355, the cleaning substance is heated also in the storage tank. The choice of a suitable temperature should preferably be done with consideration to the detergent used.
f: -the dampers 345 and 350 are closed, sealing the part of the air conditioning unit that is to be subjected to the cleaning.
g: -the pressure increasing pump 340 increases the pressure of the cleaning substance. The pressure should be chosen with consideration to the design of the cleaning system and the heating/cooling units. Preferably the pressure should be high enough to achieve an effective cleaning, but not cause any damage to the cleaning system or to sensitive parts of the heating/cooling units such as the flanges and coils. A suitable pressure is typically 20-30 bar, but parts can be made to tolerate even higher pressures. e.g. around 80 bar.
h: -the heated and pressurized cleaning substance is carried through the feeding tubes 240 and the distribution tubes 225 to the nozzles 230 and sprayed onto the cooling flanges 215 and the evaporator coils 210 of the evaporator, and possibly onto the heating flanges and distribution tubes of the heater radiator 232 and other parts of the heating/cooling system.
i: -the used cleaning substance including the washed away dirt such as particles and micro organisms, is drained from the air conditioning housing by the drainages 342.
j: -optionally the used cleaning substance is transferred back to the storage tank for regeneration.
k: -the dampers 345, 350 are opened.
l: -optionally the fan 100 is run a predetermined time period to vent and dry the air conditioning unit. Preferably the airflow is not allowed to enter the passenger compartment. This can be arranged by a dedicated evacuation duct and suitable valves to direct the airflow out from the vehicle. Alternatively, the fan may be driven in the opposite rotational direction compared to its normal rotation, giving a flow of air away from the passengers compartment.

The cleaning fluid in the storage tank needs to be refilled periodically. The storage tank 305 for the cleaning substance is preferably made of transparent or semi-transparent material similar to what is commonly used for the coolant and the windshield washer fluid, for easy inspection. The maintenance of the cleaning system will be similar to these other fluid system of vehicles. As well known in the art, different types of automatic detection systems giving indications on the amount of liquid remaining in the storage tank are available.

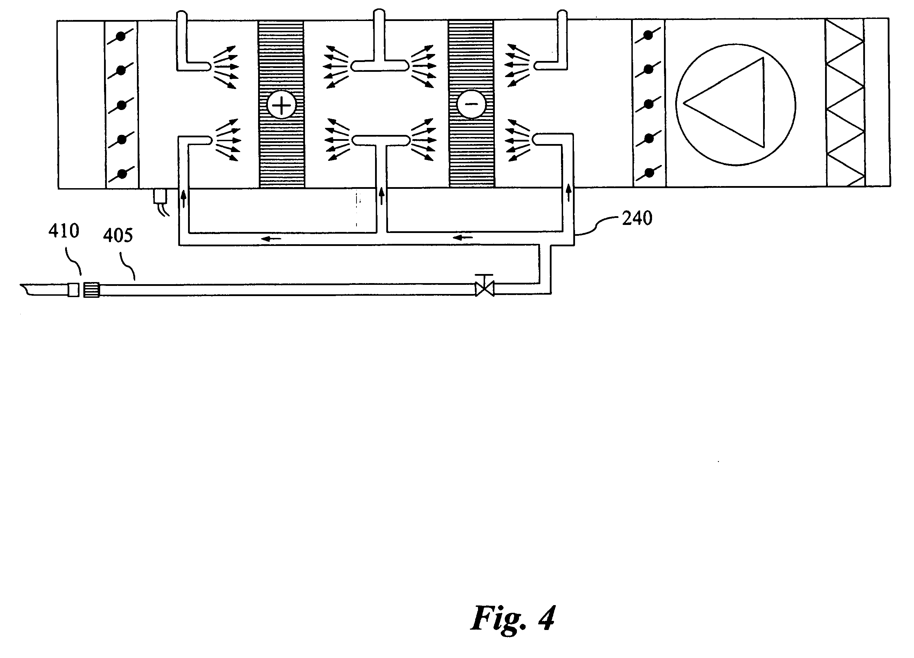

In a further embodiment of the cleaning system, schematically illustrated in FIG. 4, the cleaning substance with suitable temperature and pressure is supplied from outside of the vehicle. The feeding tubes 240 is connected to an inlet tube 405, which ends in a coupling 410. The coupling 410, which preferably is a quick or bayonet coupling, is connectable to an external supply of cleaning substance. The external supply may in the simplest case, suitable for home uses, be hot water from a faucet of the household supply water system, connected to the coupling 410 via for example a garden hose. A car service station may for example supply hot water mixed with detergent which is pressurised to a suitable pressure.

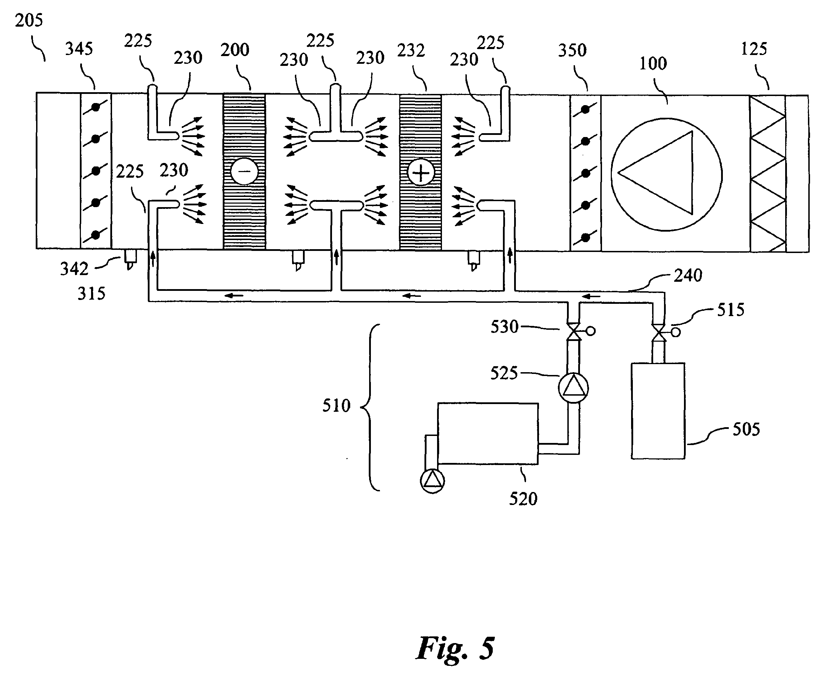

In yet a further embodiment, schematically illustrated in FIG. 5, a cleaning substance is provided in a replaceable container 505. The replaceable container 505 is attached to the feeding tubes via a remotely controllable valve 515. The replaceable container 505 is preferably a pressurized container with a cleaning substance such as a detergent gas, cleaning spray, foam, or a liquid that transforms into a foam then exposed to the pressure drop in leaving the nozzles. The design of the distribution tubes and the nozzles are preferably adapted to the cleaning substance in order to optimize the spreading. Suitable cleaning substance are commercially available, e.g. Lysol Brand II disinfectant spray from Reckitt & Colman, USA or Sterilium^{™}. The cleaning system may additionally be provided with an rinsing assembly 510, comprising a rinse storage tank 520, a circulation pump 525 and valve 530. The rinsing assembly 510 will be used to rinse the heating/cooling system after the use of the cleaning substance of the replaceable container 505.

The cleaning system according to the embodiment of invention that utilizes the replaceable container 505 may be used in a method which comprises the steps of:
a': -detecting that the air conditioning unit needs to be cleaned. The detection may e.g. be made by the operator of the vehicle, by an automated measurement system detecting build-up on the evaporator or other any measure indicating that cleaning is needed, or by that a predetermined time period between cleaning has passed.
b': -Initiate the cleaning process, preferably shortly after that the engine is turned off. Possibly other criteria should be met in order to perform the cleaning processes, e.g. the vehicle should be halted, parking brake and/or automatic gears in parking position, no persons remaining in the passengers compartment. In addition the operator of the vehicle can be given information on that a cleaning process is about to take place and is given the opportunity to cancel the process.
c': -the dampers 345 and 350 are closed, sealing the part of the air conditioning unit that is to be subjected to the cleaning.
d': -opening the valve 515 to let the cleaning substance be transported from the replaceable container 505.
e': -the cleaning substance is carried through the feeding tubes 240 and the distribution tubes 225 to the nozzles 230 and sprayed onto the cooling flanges 215 and the evaporator coils 210 of the evaporator, and possibly onto the heating flanges and distribution tubes of the heater radiator 232 and other parts of the heating/cooling system.
f': -closing the valve 515 to stop the supply of cleaning substance.
g': -opening the valve 530 and starting the circulation pump 525 to let the rinsing liquid to be transported from the rinse storage tank 520, for rinsing the heating/cooling system from micro-organisms and dirt dissolved by the cleaning substance, and possibly remains of the cleaning substance.
k: -the dampers 345, 350 are opened.

In an alternative embodiment the heat exchanger is replaced by a steam unit that produces pressurized steam. The steam pressure is preferably such that no other means for pressurization or circulation is needed in the cleaning system. A steam apparatus may also be used in combination with the a heat exchanger or other means of heating. In this case the cleaning substance is preheated by the heat exchanger, typically to a temperature below 100°. An amount of the preheated cleaning substance is then converted to steam in the steam apparatus. Steam is very effective for sanitizing and disinfection; even with a small amount of steam an almost autoclaving effect may be achieved. The required amount of steam will vary depending on the size and the design of the air conditioning unit. For a regular car air conditioning unit the steam from less than 1 litre of cleaning substance will in most cases suffice. Hence the steam apparatus can be made relatively small and not required extensive amounts of energy for producing the steam, especially not if the cleaning substance has been pre-heated, in a heat exchanger, for example. The steam apparatus may be heated electrically, via exhaust gas, or with excess heat from the compressor of the air conditioner unit, for example.

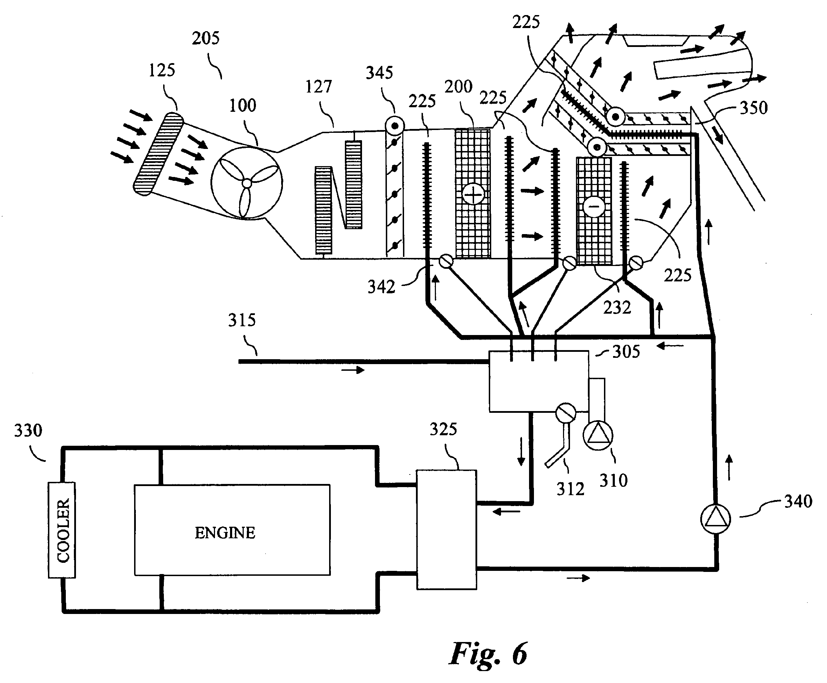

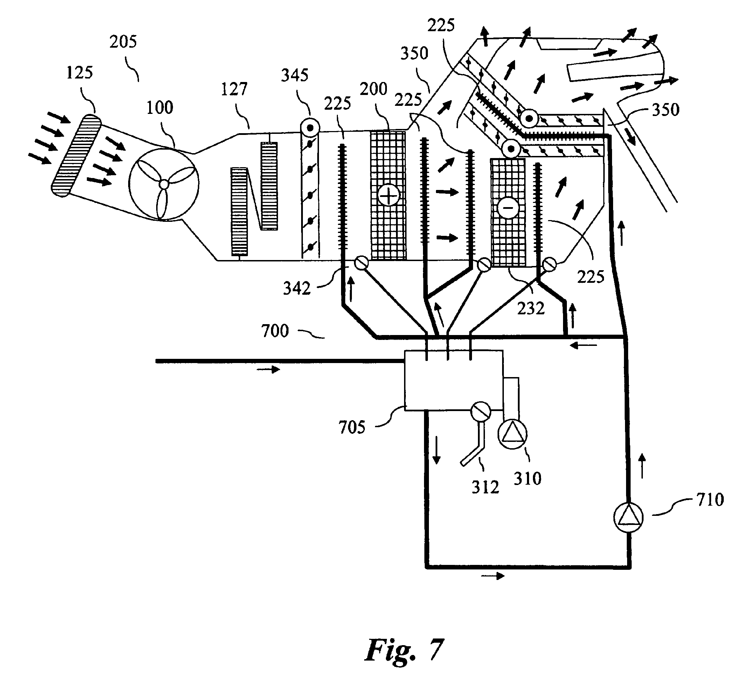

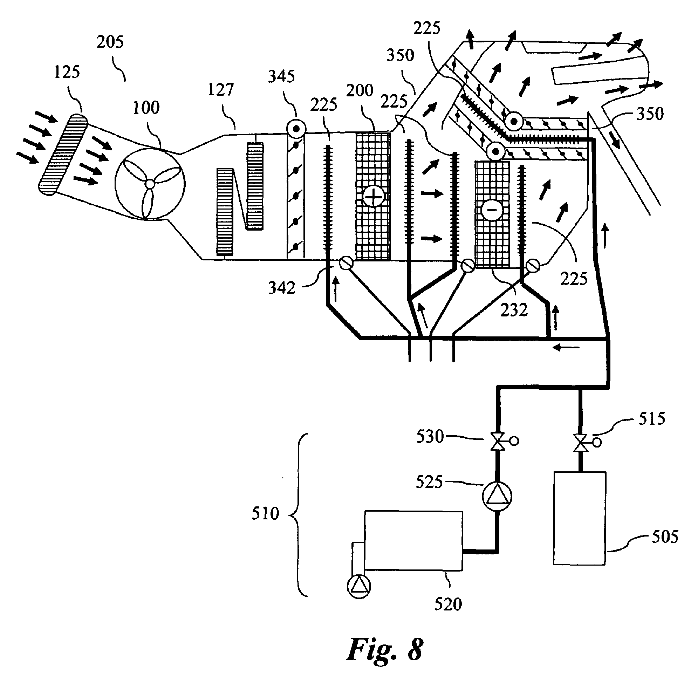

Given in FIG 6-8 are different implementation examples of the cleaning system according to the present invention. The heating/cooling system of the vehicle comprises a coarse inlet air filter 125, a fan 100, a fine particle filter 127, dampers 345, a heating unit 200 and a cooling unit 232. The heating/cooling system is provided with a plurality of distribution tubes 225 with nozzles 230. The distribution tubes are positioned to clean both the heating and cooling units as well as other parts of the heating/cooling system. FIG 6. corresponds to the preferred embodiment described with reference to FIG 4, FIG. 7 corresponds to the embodiment according to FIG 4 and FIG. 8 to the embodiment according FIG 5. The cleaning system 700 according to FIG. 7 have additionally been provided with a storage tank 705 and a pressurising pump 710, which provides a better controlled cleaning process than the direct connection to the external supply of cleaning substance of FIG. 4.

The invention has here been described with embodiments and examples relating to ground based vehicles such as cars and trucks. As appreciated by the skilled man, the invention may equally well be utilized in the heating/cooling systems of other types of vehicles such as aircrafts and boats as well as stationary air conditioning units.

A presumed main use of the apparatus and method according to the present invention is to effectively improve the conditions in the compartment of the vehicle in its everyday use. Another use of the invention is in the case there a vehicle has been contaminated with e.g. bacteria or virus during operation in an area that has been subjected to a biological attack or an outbreak of extreme nature. The disinfection of the vehicle will be greatly simplified with the present invention as parts, otherwise not easily accessible, can be disinfected effectively.

From the invention thus described, it will be obvious that the invention may be varied in many ways. Such variations are not to be regarded as a departure from the scope of the invention.

## Claims

1. A cleaning system for cleaning cooling and/or heating units of air conditioners in vehicles, wherein the cleaning system comprises a cleaning assembly (220) which comprises at least one distribution tube (225) provided with at least one nozzle for (230), and is arranged to distribute cleaning substance onto the surfaces of the cooling and/or heating units via the distribution tube (225) and nozzle(230), wherein the cleaning system is mounted in the vehicle and **characterised in that** the cleaning assembly is connected to means for heating (325) the cleaning substance, wherein the heating means (325) utilizes heat generated from the engine of the vehicle to heat the cleaning substance.

2. The cleaning system according to claim 1, **wherein** the means for heating (325) the cleaning substance comprises a heat exchanger which is arranged to be connected to the cooling system of the vehicles engine whereby the coolant of the cooling system may heat the cleaning substance.

3. The cleaning system according to claim 1 or 2, **wherein** the cleaning assembly and/or the heating means are connected to means for increasing the pressure (340) of the cleaning substance.

4. The cleaning system according to claim 1 or 2, **wherein** the cleaning assembly and/or the heating means is connected to a steam generating apparatus.

5. The cleaning system according to claim 2, **further comprising** a second means for heating (355) arranged to heat the cleaning substance if the heat exchanger does not suffice to heat the cleaning substance to a predetermined temperature.

6. The cleaning system according to any of claims 1 to 5, **further comprising** a storage tank (305) for storing the cleaning substance, and a drainage (342) positioned in a housing of the air conditioning unit and arranged to, from the cooling and/or heating unit, collect used cleaning substance, wherein the drainage is connected to the storage tank (305) so that used cleaning substance can be stored in the storage tank (305) and reused or regenerated.

7. A method of cleaning cooling and/or heating units of air conditioners in vehicles, wherein the cleaning system comprises a cleaning assembly (220) arranged to distribute cleaning substance to the surfaces of the cooling and/or heating units, which method comprises the steps of:
- *determining* (a) that the heating/cooling system needs to be clean;
- *heating* (e) the cleaning substance by utilizing heat generated by the engine of the vehicle;
- *flowing* (h) a cleaning substance through a feeding tubes to at least one distribution tube and further via at least one nozzle to be distributed onto the heating unit and/or cooling unit

8. The method according to claim 7, **wherein** the step of heating (e) comprises that the cleaning substance flows through a heat exchanger wherein said heat exchanger is connected to the cooling system of the engine and whereby transport heat from the coolant of the engines cooling system to the cleaning substance.

9. The method according to claim 7 or 8, **further comprising** a step of *sealing* (f) the part or parts of the air conditioning unit that should be cleaned;

10. The method according to any of claims 7 to 9, **further comprising** the step of *directing* (i) the used cleaning substance to a storage tank for regeneration.

11. The method according to claim 7, wherein the method comprises the further step of *venting* (1) the heating/cooling unit after the cleaning process by providing a flow of air from the heating/cooling unit to the outside of the vehicle.

## Patentansprüche

1. Reinigungssystem zum Reinigen von Kühl- und/oder Heizeinheiten von Klimaanlagen in Fahrzeugen, wobei das Reinigungssystem eine Reinigungsanordnung (220) aufweist, welche wenigstens ein mit wenigstens einer Düse (230) versehenes Verteilungsrohr (225) aufweist, und dafür eingerichtet ist, Reinigungssubstanz auf die Oberflächen der Kühl- und/oder Heizeinheiten mittels des Verteilungsrohres (225) und der Düse (230) zu verteilen, wobei das Reinigungssystem in dem Fahrzeug montiert ist und **dadurch gekennzeichnet, dass** die Reinigungsanordnung mit einer Einrichtung (325) zum Erwärmen der Reinigungssubstanz verbunden ist, wobei die Erwärmungseinrichtung (325) von dem Motor des Fahrzeugs erzeugte Wärme zum Erwärmen der Reinigungssubstanz nutzt.

2. Reinigungssystem nach Anspruch 1, wobei die Einrichtung (325) zum Erwärmen der Reinigungssubstanz einen Wärmetauscher aufweist, welcher so eingerichtet ist, dass er mit dem Kühlsystem des Fahrzeugmotors verbunden ist, wodurch das Kühlmittel des Kühlungssystems die Reinigungssubstanz erwärmen kann.

3. Reinigungssystem nach Anspruch 1 oder 2, wobei die Reinigungsanordnung und/oder die Erwärmungseinrichtung mit einer Einrichtung (340) zur Erhöhung des Drucks der Reinigungssubstanz verbunden sind.

4. Reinigungssystem nach Anspruch 1 oder 2, wobei die Reinigungsanordnung und/oder die Erwärmungseinrichtung mit einer Dampferzeugungsvorrichtung verbunden sind.

5. Reinigungssystem nach Anspruch 2, welches ferner eine zweite Einrichtung (335) zum Erwärmen aufweist, die dafür eingerichtet ist, die Reinigungssubstanz zu erwärmen, wenn der Wärmetauscher nicht ausreicht, um die Reinigungssubstanz auf ein vorbestimmte Temperatur zu erwärmen.

6. Reinigungssystem nach einem der Ansprüche 1 bis 5, welches ferner einen Aufbewahrungsbehälter (305) zum Aufbewahren der Reinigungssubstanz und einen in dem Gehäuse der Klimaanlage positionierten Ablauf (342) aufweist, der dafür eingerichtet ist, aus der Kühl- und/oder Heizeinheit verbrauchte Reinigungssubstanz zu sammeln, wobei der Ablauf mit dem Aufbewahrungsbehälter verbunden ist, so dass verbrauchte Reinigungssubstanz in dem Aufbewahrungsbehälter (305) aufbewahrt und nochmals verwendet oder regeneriert werden kann.

7. Verfahren zum Reinigen von Kühl- und/oder Heizeinheiten von Klimaanlagen in Fahrzeugen, wobei das Reinigungssystem eine Reinigungsanordnung (220) aufweist, die dafür eingerichtet ist, Reinigungssubstanz auf den Oberflächen der Kühl- und/oder Heizeinheiten zu verteilen, wobei das Verfahren die Schritte aufweist:
- Ermitteln (a) dass das Heiz/Kühl-System einer Reinigung bedarf;
- Erwärmen (e) der Reinigungssubstanz unter Nutzung durch das Fahrzeug erzeugter Wärme;
- Durchströmen lassen (h) einer Reinigungssubstanz durch ein Zuführungsrohr zu wenigstens einem Verteilungsrohr und ferner durch wenigstens eine Düse zur Verteilung auf der Heizeinheit und/oder Kühleinheit

8. Verfahren nach Anspruch 7, wobei der Schritt der Erwärmung (e) umfasst, dass die Reinigungssubstanz durch einen Wärmetauscher strömt, wobei der Wärmetauscher mit dem Kühlsystem des Motors verbunden ist, wodurch Wärme aus dem Kühlmittel des Motorkühlsystem an die Reinigungssubstanz übertragen wird.

9. Verfahren nach Anspruch 7 oder 8, welches ferner den Schritt des Verschließens (f) des Teils oder der Teile der Klimaanlageneinheit aufweist, die gereinigt werden sollen;

10. Verfahren nach einem der Ansprüche 7 bis 9, welches ferner den Schritt einer Weiterleitung (i) der verbrauchten Reinigungssubstanz zu einem Aufbewahrungsbehälter zur Regeneration aufweist.

11. Verfahren nach Anspruch 7, wobei das Verfahren ferner den Schritt einer Entlüftung (1) der Heiz/Kühl-Einheit nach dem Reinigungsvorgang aufweist, indem ein aus dem Fahrzeug austretender Luftstrom aus der Heiz/Kühl-Einheit erzeugt wird.

## Revendications

1. Système de nettoyage destiné à nettoyer les unités de refroidissement et/ou de chauffage de climatiseurs dans des véhicules, dans lequel le système de nettoyage comprend un ensemble de nettoyage (220) qui comprend au moins un tube de distribution (225) pourvu d'au moins une buse (230), et est agencé pour distribuer une substance nettoyante sur les surfaces des unités de refroidissement et/ou de chauffage par le biais du tube de distribution (225) et de la buse (230), dans lequel le système de nettoyage est monté dans le véhicule et **caractérisé en ce que** l'ensemble de nettoyage est raccordé à des moyens de chauffage (325) de la substance nettoyante, dans lequel les moyens de chauffage (325) utilisent la chaleur générée par le moteur du véhicule pour chauffer la substance nettoyante.

2. Système de nettoyage selon la revendication 1, dans lequel les moyens de chauffage (325) de la substance nettoyante comprennent un échangeur de chaleur qui est agencé pour être raccordé au système de refroidissement du moteur du véhicule, le réfrigérant du système de refroidissement pouvant chauffer la substance nettoyante.

3. Système de nettoyage selon la revendication 1 ou 2, dans lequel l'ensemble de nettoyage et/ou les moyens de chauffage sont raccordés à des moyens destinés à augmenter la pression (340) de la substance nettoyante.

4. Système de nettoyage selon la revendication 1 ou 2, dans lequel l'ensemble de nettoyage et/ou les moyens de chauffage sont raccordés à un appareil de génération de vapeur.

5. Système de nettoyage selon la revendication 2, comprenant en outre des seconds moyens de chauffage (355) agencés pour chauffer la substance nettoyante si l'échangeur de chaleur ne suffit pas à chauffer la substance nettoyante à une température prédéterminée.

6. Système de nettoyage selon l'une quelconque des revendications 1 à 5, comprenant en outre un réservoir de stockage (305) destiné à stocker la substance nettoyante, et un moyen de drainage (342) positionné dans un logement de l'unité de climatisation et agencé pour, à partir de l'unité de refroidissement et/ou de chauffage, collecter la substance nettoyante utilisée, dans lequel le moyen de drainage est raccordé au réservoir de stockage (305) de sorte que la substance nettoyante utilisée peut être stockée dans le réservoir de stockage (305) et réutilisée ou régénérée.

7. Procédé de nettoyage des unités de refroidissement et/ou de chauffage de climatiseurs dans des véhicules, dans lequel le système de nettoyage comprend un ensemble de nettoyage (220) agencé pour distribuer la substance nettoyante sur les surfaces des unités de refroidissement et/ou de chauffage, lequel procédé comprend les étapes consistant à :
- déterminer (a) que le système de chauffage/refroidissement nécessite d'être nettoyé ;
- chauffer (e) la substance nettoyante en utilisant la chaleur générée par le moteur du véhicule ;
- faire circuler (h) une substance nettoyante à travers des tubes d'alimentation vers au moins un tube de distribution et plus loin par le biais d'au moins une buse pour la distribuer sur l'unité de chauffage et/ou l'unité de refroidissement.

8. Procédé selon la revendication 7, dans lequel l'étape de chauffage (e) comprend le fait que la substance nettoyante circule à travers un échangeur de chaleur dans lequel ledit échangeur de chaleur est raccordé au système de refroidissement du moteur et transportant la chaleur du réfrigérant du système de refroidissement de moteur à la substance nettoyante.

9. Procédé selon la revendication 7 ou 8, comprenant en outre une étape de réalisation d'étanchéités (f) la ou les partie(s) de l'unité de climatisation qui devrait être nettoyée.

10. Procédé selon l'une quelconque des revendications 7 à 9, comprenant en outre l'étape consistant à diriger (i) la substance nettoyante utilisée vers un réservoir de stockage en vue de sa régénération.

11. Procédé selon la revendication 7, dans lequel le procédé comprend l'autre étape consistant à aérer (1) l'unité de chauffage/de refroidissement après le processus de nettoyage en fournissant un écoulement d'air de l'unité de chauffage/refroidissement vers l'extérieur du véhicule.
